# EUROPEAN PATENT APPLICATION

(11) **EP 4 712 605 A1**
(43) Date of publication of application: **18.03.2026**
(21) Application number: 23936863.2
(22) Date of filing: 12.05.2023
(51) Int. Cl.: H04W 64/00

(54) **WIRELESS COMMUNICATION METHOD, SENDING-END DEVICE, AND AMBIENT POWER (AMP) DEVICE**

(71) Applicant: GUANGDONG OPPO MOBILE TELECOMMUNICATIONS CORP., LTD., Dongguan, Guangdong 523860 (CN)
(72) Inventor: QI, Yinan, Dongguan, Guangdong 523860 (CN)
(74) Representative: Penza, Giancarlo
(86) International application number: PCT/CN2023/094020
(87) International publication number: WO 2024/234170

(57) **Abstract**

A wireless communication method, a sending-end device and an AMP device. The method includes: a sending-end device sending a first positioning frame, wherein the first positioning frame carries a positioning signal, and the positioning signal is used for positioning an AMP device.

## Description

### TECHNICAL FIELD

Embodiments of the present disclosure relate to the field of communications, and particularly to methods for wireless communication, a transmitting-end device, and an ambient power (AMP) device.

### BACKGROUND

Positioning is an important application scenario of an ambient power (AMP) device. Constrained by the power consumption and cost of the device, it is impossible to perform the positioning by using a positioning reference signal with large bandwidth in a cellular positioning system. Therefore, when the AMP device is introduced in the communication system, how to realize the positioning of the AMP device is an urgent problem to be solved.

### SUMMARY

The present disclosure provides methods for wireless communication, a transmitting-end device, and an AMP device, which can realize the positioning of the AMP device.

In a first aspect, a method for wireless communication is provided. The method includes the following operation. A transmitting-end device transmits a first positioning frame, where the first positioning frame carries a positioning signal, and the positioning signal is used for positioning of an AMP device.

In a second aspect, a method for wireless communication is provided. The method includes the following operation. An AMP device receives a first positioning frame, where the first positioning frame carries a positioning signal, and the positioning signal is used for positioning of the AMP device.

In a third aspect, a terminal device is provided. The terminal device is configured to perform the method in the aforementioned first aspect or implementations thereof.

Specifically, the terminal device includes a functional module configured to perform the method in the aforementioned first aspect or implementations thereof.

In a fourth aspect, a network device is provided. The network device is configured to perform the method in the aforementioned second aspect or implementations thereof.

Specifically, the network device includes a functional module configured to perform the method in the aforementioned second aspect or implementations thereof.

In a fifth aspect, a terminal device is provided. The terminal device includes a processor and a memory. The memory is configured to store a computer program, and the processor is configured to call and run the computer program stored in the memory to perform the method in the aforementioned first aspect or implementations thereof.

In a sixth aspect, a network device is provided. The network device includes a processor and a memory. The memory is configured to store a computer program, and the processor is configured to call and run the computer program stored in the memory to perform the method in the aforementioned second aspect or implementations thereof.

In a seventh aspect, a chip is provided. The chip is configured to implement the method in any one of the aforementioned first aspect and second aspect, or implementations thereof. Specifically, the chip includes a processor configured to call and run a computer program from a memory, to enable a device installed with the chip to perform the method in any one of the aforementioned first aspect and second aspect, or implementations thereof.

In an eighth aspect, a computer-readable storage medium is provided. The computer-readable storage medium is used for storing a computer program. The computer program enables a computer to perform the method in any one of the aforementioned first aspect and second aspect, or implementations thereof.

In a ninth aspect, a computer program product is provided. The computer program product includes computer program instructions that cause a computer to perform the method in any one of the aforementioned first aspect and second aspect, or implementations thereof.

In a tenth aspect, a computer program is provided. The computer program, when executed on a computer, enables the computer to perform the method in any one of the aforementioned first aspect and second aspect, or implementations thereof.

According to the above technical solutions, the transmitting-end device can transmit, to the AMP device, the positioning frame that carries the positioning signal. Furthermore, the transmitting-end device can realize the positioning of the AMP device based on the positioning signal.

### BRIEF DESCRIPTION OF THE DRAWINGS

FIG. 1 is a schematic diagram of a communication system architecture according to an embodiment of the present disclosure.
FIG. 2 is a schematic diagram of a zero-power communication system according to an example of the present disclosure.
FIG. 3 is a schematic diagram of power harvesting according to an embodiment of the present disclosure.
FIG. 4 is a schematic diagram of back scattering communication according to an embodiment of the present disclosure.
FIG. 5 is a schematic diagram of a circuit for resistance load modulation according to an embodiment of the present disclosure.
FIG. 6 is a schematic diagram of a legacy MAC frame format.
FIG. 7 is a schematic diagram of a NDP MAC frame format.
FIG. 8 is a schematic diagram of a format of a WUR PPDU.
FIG. 9 is a schematic interaction diagram of a method for wireless communication according to an embodiment of the present disclosure.
FIG. 10 is a schematic diagram of formats of a synchronization sequence according to an embodiment of the present disclosure.
FIG. 11 is a schematic diagram of a format in which first indication information is carried by a SIG field according to an embodiment of the present disclosure.
FIG. 12 is a schematic diagram of a MAC frame format carrying a positioning signal according to an embodiment of the present disclosure.
FIG. 13 is a schematic diagram of a manner for transmitting multiple positioning signals according to an embodiment of the present disclosure.
FIG. 14 is a schematic diagram of another manner for transmitting multiple positioning signals according to an embodiment of the present disclosure.
FIG. 15 is a schematic block diagram of a transmitting-end device according to an embodiment of the present disclosure.
FIG. 16 is a schematic block diagram of an AMP device according to an embodiment of the present disclosure.
FIG. 17 is a schematic block diagram of a communication device according to an embodiment of the present disclosure.
FIG. 18 is a schematic block diagram of a chip according to an embodiment of the present disclosure.
FIG. 19 is a schematic block diagram of a communication system according to an embodiment of the present disclosure.

### DETAILED DESCRIPTION

Hereinafter, the technical solutions in the embodiments of the present disclosure will be described with reference to the accompanying drawings in the embodiments of the present disclosure. It is apparent that the described embodiments are part of the embodiments of the present disclosure, but not all of the embodiments. For the embodiments in the present disclosure, all other embodiments acquired by those skilled in the art without creative work fall within the scope of protection of the present disclosure.

The technical solutions in the embodiments of the present disclosure may be applied to various communication systems, such as a Global System of Mobile communication (GSM) system, a Code Division Multiple Access (CDMA) system, a Wideband Code Division Multiple Access (WCDMA) system, a General Packet Radio Service (GPRS), a Long Term Evolution (LTE) system, an Advanced long term evolution (LTE-A) system, a New Radio (NR) system, an evolution system in the NR system, a LTE-based access to unlicensed spectrum (LTE-U) system, a NR-based access to unlicensed spectrum (NR-U), a Non-Terrestrial Networks (NTN) system, a Universal Mobile Telecommunication System (UMTS), a Wireless Local Area Networks (WLAN), a Wireless Fidelity (WiFi), a 5th-Generation (5G) system, a cellular Internet of Things (IoT) system, a cellular passive IoT system or other communication systems, etc.

Typically, the conventional communication systems support a limited number of connections and are easy to be implemented. However, with the development of communication technology, the mobile communication systems may support not only conventional communications, but also support, for example, Device to Device (D2D) communication, Machine to Machine (M2M) communication, Machine Type Communication (MTC), Vehicle to Vehicle (V2V) communication, Vehicle-to-everything (V2X) communication, and the like. The embodiments of the present disclosure may also be applied to such communication systems.

Optionally, the communication system in the embodiments of the present disclosure may be applied to a Carrier Aggregation (CA) scenario, a Dual Connectivity (DC) scenario, or a Standalone (SA) network layout scenario.

Optionally, the communication system in the embodiments of the present disclosure may be applied to an unlicensed spectrum, where the unlicensed spectrum may also be regarded as a shared spectrum. Alternatively, the communication system in the embodiments of the present disclosure may be applied to a licensed spectrum, where the licensed spectrum may also be regarded as a non-shared spectrum.

The embodiments of the present disclosure describe various embodiments in combination with a network device and a terminal device. Herein, the terminal device may also be referred to as User Equipment (UE), an access terminal, a subscriber unit, a subscriber station, a mobile station, a mobile platform, a remote station, a remote terminal, a mobile device, a user terminal, a terminal, a wireless communication device, a user agent or a user device, or the like.

In the embodiments of the present disclosure, the network device may be a device for communicating with a mobile device. The network device may be an Access Point (AP) in a WLAN, a Base Transceiver Station (BTS) in a GSM or CDMA, a base station (Node B, NB) in a WCDMA, an Evolutional Node B (eNB or eNodeB) in a LTE, a relay station or an AP, a vehicle-mounted device, a wearable device, a network device (gNB) in an NR network, a network device in a cellular IoT, a network device in a cellular passive IoT, a network device in a future evolutional Public Land Mobile Network (PLMN) network, or a network device in an NTN network, or the like.

As an example and not limitation, in the embodiments of the present disclosure, the network device may have mobile characteristics, for example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on a land, a water area, or the like.

In the embodiments of the present disclosure, the network device may provide service(s) for a cell, and the terminal device may communicate with the network device through a transmission resource (e.g., frequency domain resource or spectrum resource) used by the cell. The cell may be the cell corresponding to the network device (e.g., a base station), and the cell may belong to a macro base station or a base station corresponding to a Small cell. The small cell herein may include: a metro cell, a micro cell, a pico cell, a femto cell, etc. Such small cells have the characteristics of small coverage and low transmission power, and are suitable for providing high-rate data transmission service(s).

The terminal device may be a STATION (ST) in a WLAN, which may be a cellular telephone, a cordless telephone, a Session Initiation Protocol (SIP) telephone, a Wireless Local Loop (WLL) station, a Personal Digital Assistant (PDA) device, a handheld device having wireless communication function, a computing device or other processing devices connected to a wireless modem, an vehicle-mounted device, a wearable device, a terminal device in a next generation communication system such as an NR network, a terminal device in a future evolutional PLMN network, a terminal device in a cellular IoT, a terminal device in a cellular passive IoT, or the like.

In the embodiments of the present disclosure, the terminal device may be deployed on land, including indoor or outdoor, handheld, wearable, or vehicle-mounted. The terminal device may also be deployed on the water (such as ships). Moreover, the terminal device may also be deployed in the air (e.g., on an aircraft, balloon and satellite, etc.).

In the embodiments of the present disclosure, the terminal device may be a Mobile Phone, a tablet (Pad), a computer with a wireless transceiving function, a Virtual Reality (VR) terminal device, an Augmented Reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, or the like.

As an example and not limitation, in the embodiments of the present disclosure, the terminal device may also be a wearable device. The wearable device may also be referred to as a wearable smart device, which is a generic name of the wearable devices that are intelligently designed and developed by applying wearable technologies to daily wear, such as glasses, gloves, watches, clothing and shoes. The wearable device is a portable device that is worn directly on the body or integrated into the clothes or accessories of the user. The wearable device may be not only a kind of hardware device, but also realize powerful functions through software support, data interaction and cloud interaction. Generalized wearable smart devices have features of full functions and large size, and may realize complete or partial functions without relying on smart phones, such as a smart watch or smart glasses, as well as those only focus on a certain type of application functions and need to be used in cooperation with other devices (e.g., smart phones), such as various smart bracelets and smart jewelleries for physical sign monitoring.

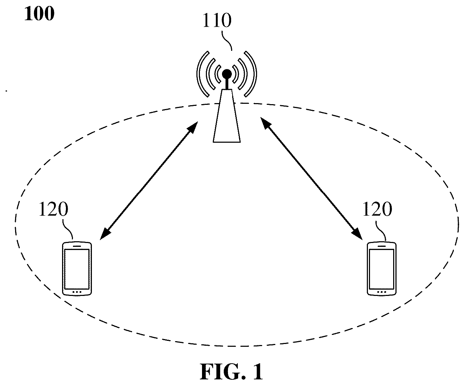

Exemplarily, FIG. 1 illustrates a communication system 100 to which an embodiment of the present disclosure is applied. The communication system 100 may include a network device 110, which may be a device in communication with a terminal device 120 (or referred to as a communication terminal or a terminal). The network device 110 may provide communication coverage for a specific geographic area, and communicate with the terminal device(s) within the coverage area.

One network device and two terminal devices are exemplarily shown in FIG. 1. Optionally, the communication system 100 may include multiple network devices, and another number of terminal devices may be included within the coverage range of each network device, which is not limited in the embodiments of the present disclosure.

Optionally, the communication system 100 may further include other network entities such as a network controller and a mobility management entity, which are not limited in the embodiments of the present disclosure.

It should be understood that, in the embodiments of the present disclosure, the device having the communication function in the network/system may be referred to as the communication device. Taking the communication system 100 shown in FIG. 1 as an example, the communication device may include the network device 110 and the terminal device 120 both having the communication function. The network device 110 and the terminal device 120 may be specific devices described above, which are not described repeatedly herein. The communication device may further include other devices in the communication system 100, such as the network controller and the mobility management entity, which are not limited in the embodiments of the present disclosure.

It should be understood that the terms "system" and "network" in the present disclosure may be generally used interchangeably herein. In the present disclosure, the term "and/or" only indicates an association relationship for describing associated objects and represents that there are three relationships. For example, A and/or B may represent three conditions: i.e., independent existence of A, existence of both A and B and independent existence of B. In addition, the character "/" in the present disclosure typically represents that previous and next associated objects form an "or" relationship.

It should also be understood that the term "indicate" referred to in the embodiments of the present disclosure may be a direct indication or an indirect indication, and may also be indicative of an associated relationship. For example, "A indicates B", which may mean that A directly indicates B, e.g., B may be acquired through A. It may further mean that A indirectly indicates B, e.g., A indicates C, and B may be acquired through C. It may further mean that there is an association between A and B.

In the description of the embodiments of the present disclosure, the term "corresponding" may represent that there is a direct correspondence or an indirect correspondence between the two objects, or may further represent that there is an association relationship between the two objects, a relationship between the indication and the object to be indicated, or a relationship between the configuration and the object to be configured, or the like.

In the embodiments of the present disclosure, the "predefined" may be implemented by pre-storing corresponding codes, tables, or by other means that may be used to indicate relevant information in devices (such as terminal devices and network devices), and the specific implementations of which are not limited in the present disclosure. For example, the "predefined" may refer to what is defined in a protocol.

In the embodiments of the present disclosure, the "protocol" may be a standard protocol in the communication field, such as an LTE protocol, an NR protocol, and related protocols applied in future communication systems, which is not limited in the present disclosure.

In order to facilitate understanding of the technical solutions of the embodiments of the present disclosure, related technologies of the embodiments of the present disclosure are elaborated below.

### I. Zero-power communication

The key technologies in zero-power communication include power harvesting technology, back scattering communication technology, and low-power technology.

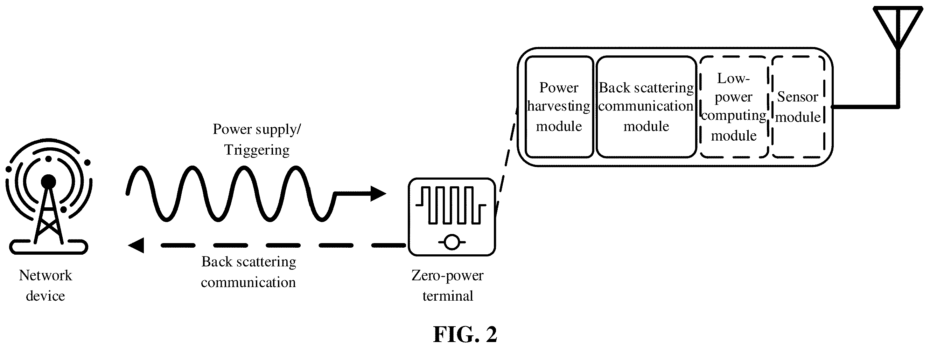

As illustrated in FIG. 2, a typical zero-power communication system (e.g., a Radio Frequency Identification (RFID) system) includes a network device (e.g., a reader/writer in the RFID system) and a zero-power device (e.g., an electronic tag). The network device is configured to transmit a wireless power supply signal and a downlink communication signal to the zero-power device, and also receive a back scattering signal from the zero-power device. A basic zero-power device includes a power harvesting module, a back scattering communication module and a low-power computing module. In addition, the zero-power device may further include a memory or sensor, which is used for storing some basic information (such as item identification, etc.) or sensing data such as ambient temperature and ambient humidity.

For example, the power harvesting module may harvest the power carried by radio waves in space (the radio waves emitted by the network device as illustrated in FIG. 2) for driving the low-power computing module of the zero-power device as well as implementing the back scattering communication. Upon acquiring the power, the zero-power device may receive a control command from the network device, and further transmit, based on the control signaling, data to the network device in a back scattering-based manner. The transmitted data may be the data stored by the zero-power device itself (such as identifier or pre-written information, e.g., a manufacturing date, brand, manufacturer of a product). The zero-power device may be loaded with various sensors, thereby reporting the data collected by the various sensors based on the zero-power mechanism.

Hereinafter, the key technologies in the zero-power communication are described below.

### 1. RF Power Harvesting

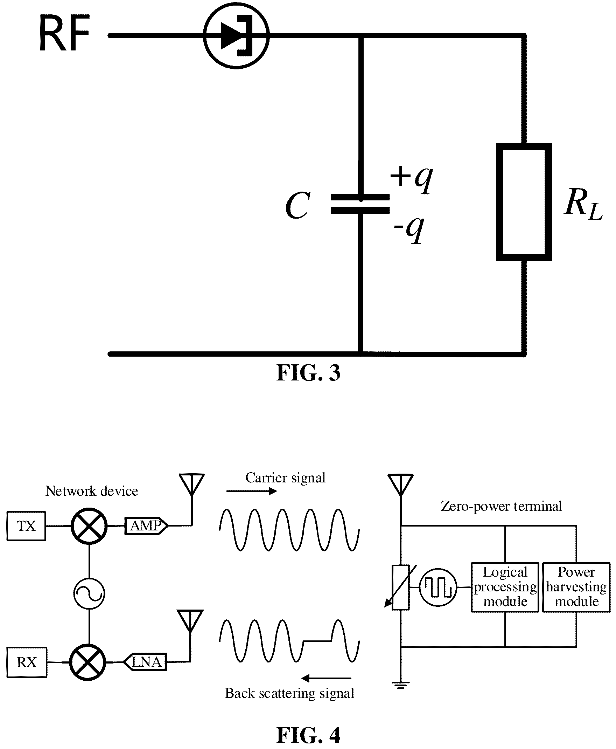

As illustrated in FIG. 3, the RF power harvesting module harvests the electromagnetic-wave power in space based on a principle of electromagnetic induction, and further acquires the power required for driving the operation of the zero-power device, such as driving low-power demodulation and modulation modules, reading of the sensors and memory, and the like. Therefore, the zero-power device does not require a conventional battery.

### 2. Back Scattering Communication

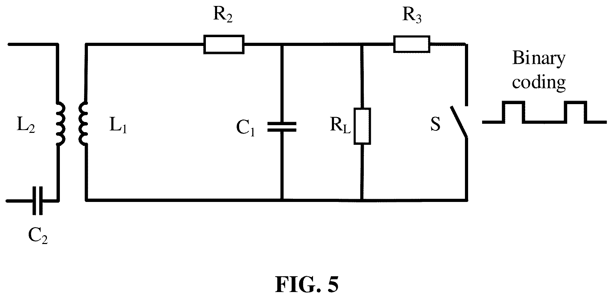

As illustrated in FIG. 4, the zero-power device receives a carrier signal from the network device, modulates the carrier signal, loads information to be transmitted, and radiates the modulated signal through an antenna. Such information transmission process is referred to as back scattering communication. The back scattering is closely related to load modulation functions. The modulation process is completed by adjusting and controlling circuit parameters of an oscillation loop of the zero-power device according to a beat of a data stream, to cause the parameters such as the size of impedance of the zero-power device to be changed accordingly. The load modulation technology mainly includes resistance load modulation and capacitance load modulation. In the resistance load modulation, a resistor is connected in parallel to a load, and the resistor is turned on or off based on the control of a binary data stream. As illustrated in FIG. 5, the turning-on or turning-off of the resistor may cause the change of the circuit voltage, so that amplitude shift keying (ASK) modulation can be realized. That is, the modulation and transmission of the signal can be realized by adjusting the amplitude of the back scattering signal of the zero-power device. Similarly, in the capacitance load modulation, a change of a resonant frequency of the circuit may be implemented by turning on and turning off a capacitor, so that frequency shift keying (FSK) modulation can be realized. That is, the modulation and transmission of the signal can be realized by adjusting the operating frequency of the back scattering signal of the zero-power device.

It may be seen that the zero-power device modulates information of the incoming signal by means of load modulation, thereby realizing the process of the back scattering communication. Therefore, the zero-power device has following significant advantages.
(1) The zero-power device does not actively transmit the signal, thus, complex radio frequency links (such as power amplifiers (PA), radio frequency filters) are unnecessary.
(2) The zero-power device is not require to actively generate a high-frequency signal, thus, thus, a high-frequency crystal oscillator is unnecessary.
(3) By using the back scattering communication, the signal transmission of the terminal does not need to consume the power of the terminal itself.

### 3. Coding technology

For the data transmitted by the zero-power device, different forms of codes may be used to represent binary "1" and "0". The radio frequency identification system typically uses one of the following coding methods: inverse non-return to zero (NRZ) coding, Manchester coding, unipolar return to zero (RZ) coding, differential binary phase (DBP) coding, differential encoding, pulse interval encoding (PIE), bi-phase space encoding (FM0), Miller coding and differential coding. Generally speaking, in different encoding techniques, 0 and 1 are represented by using different pulse signals.

In some scenarios, on the basis of power sources and usage modes of zero-power devices, the zero-power devices may be classified into the following types.

### 1. Passive zero-power device

The zero-power device (such as the electronic tag the in RFID system) does not require a built-in battery. When the zero-power device approaches the network device (for example, the reader/writer in the RFID system), the zero-power device is located in a near field range formed by the radiation of the antenna of the network device. Therefore, an induced current is generated by the antenna of the zero-power device through the electromagnetic induction, and the induced current drives a low-power chip circuit of the zero-power device. Operations such as the demodulation of a forward link signal as well as the modulation of a backward link (or referred to as a reflection link) signal can be realized. For the backscatter link, the zero-power device can implement the signal transmission in the back scattering manner.

It can be seen that passive zero-power device does not need the built-in battery to drive either the forward link or the backward link. Thus, the passive zero-power device is a real zero-power device.

The passive zero-power device does not need the battery, the RF circuit and baseband circuit thereof are very simple, and the passive zero-power device does not need devices such as a low noise amplifier (LNA), a power amplifier (PA), a crystal oscillator, an analog-to-digital converter (ADC), and the like. Therefore, the passive zero-power device has many advantages such as having a small size, a light weight, a very cheap price and a long service life.

The passive zero-power terminal may also support other power harvesting manners to harvest the ambient power (such as photovoltaic energy, thermal energy, kinetic energy, and mechanical energy). Thus, the power for driving the circuitry can be acquired, and the communication of the terminal device can be supported.

### 2. Semi-passive zero-power device

The semi-passive zero-power device is not equipped with a conventional battery, but the RF power harvesting module may be used to harvest the radio wave power, or harvest the ambient power (such as solar energy, thermal energy and mechanical vibration energy); and the RF power harvesting module may further store the harvested power in a power storage unit (such as a capacitor). After acquiring the power, the power storage unit may drive the low-power chip circuit of the zero-power device, to realize the operations such as the demodulation of the forward link signal and the modulation of the backward link signal. For the backscatter link, the zero-power device can implement the signal transmission in the back scattering manner. Alternatively, based on the harvested power, the zero-power device can perform active transmitting communication by using a low-power transmitter.

It can be seen that the semi-passive zero-power device does not need the built-in battery to drive either the forward link or the backward link. Although the power stored in the capacitor is used during the operation, the power is derived from the radio power harvested by the power harvesting module. Therefore, the semi-passive zero-power device is also a real zero-power device.

The semi-passive zero-power device inherits many advantages of the passive zero-power device. Thus, the semi-passive zero-power device has many advantages, such as a small size, a light weight, an extremely low price, and a long service life.

### 3. Active zero-power device

In some scenarios, the used zero-power device may also be an active zero-power device, which may have the built-in battery. The battery is used to drive the low-power chip circuitry of the zero-power device, to realize the operations such as the demodulation of the forward link signal and the modulation of the backward link signal. However, for the backscatter link, the zero-power device can implement the signal transmission in the back scattering manner. Therefore, the zero power aspect of such type of devices mainly lies in that the signal transmission in the backward link does not require the power of the terminal itself, but uses the back scattering manner.

The active zero-power terminal supplies the power to the RFID chip through the built-in battery, thereby increasing the reading/writing distance of the active zero-power terminal, and further improving communication reliability. Therefore, the active zero-power terminal can be applied to some scenarios with relatively high requirements on the communication distance, the reading latency, etc.

In some scenarios, zero-power devices may be classified as follows on the basis of transmitter types.

### 1) Zero-power device based on back scattering

Such type of zero-power device transmits uplink data by using the foregoing back scattering manner. Such type of zero-power device does not have an active transmitter for active transmission, but only have a transmitter for back scattering. Therefore, when such type of zero-power device transmits the data, the network device is required to provide a carrier. Such type of the zero-power device performs the back scattering based on the carrier, to further realize the data transmission.

### 2) Zero-power device based on active transmitter

Such type of zero-power device performs uplink data transmission by using an active transmitter with an active transmission capability. Therefore, during the data transmission, such type of zero-power devices can transmit the data by using its own active transmitter without the need for the carrier provided by the network device. The active transmitter suitable for the zero-power device may include, for example, an ultra-low-power ASK transmitter, an ultra-low-power FSK transmitter, or the like. When a signal of 100 uw is transmitted, the overall power consumption can be reduced to 400 uw to 600 uw.

### 3) Zero-power device with both back scattering transmitter and active transmitter

Such type of zero-power device may support both the back scattering transmitter and the active transmitter. Based on different conditions (e.g., power status and available ambient power) or the scheduling by the network device, such type of zero-power device may determine which signal transmission manner to be used, that is, using the active transmitter or the back scattering transmitter to perform the signal transmission.

With the rapid development of IoT, the existing IoT communication technologies can no longer meet the IoT communication requirements in many scenarios, such as the following.

### 1. Harsh communication environments

Some IoT scenarios may face extreme conditions, such as high temperature, extremely low temperature, high humidity, high pressure, high radiation, or high-speed motion; for example, in ultra-high voltage substations, for rail monitoring of high-speed trains, environmental monitoring in frigid regions, industrial production lines, etc. In these scenarios, the existing IoT terminals may not be operable due to the operating environment limitations of the conventional power supplies. In addition, the extreme operating environments are also not conductive to the maintenance of IoT, such as battery replacement.

### 2. Requirement for extremely small-size terminal forms

In some IoT communication scenarios, such as food traceability, commodity circulation, and smart wearable, the terminal is required to have an extremely small size to facilitate the usage in such scenarios. For example, an IoT terminal used for product management in the supply chain generally takes the form of electronic tags, which are embedded into product package in a very compact form. For another example, the lightweight wearable device can improve the user experience while meeting the needs of the user.

### 3. Ultra-low-cost IoT communication requirements

Many IoT communication scenarios require that the cost of the IoT terminal is low enough to improve competitiveness over other alternative technologies. For example, in logistics or warehousing scenarios, in order to facilitate management of a large quantity of circulating items, the IoT terminal may be attached to each item, so as to enable accurate management in the entire logistics process and the entire cycle through communication between the terminal and the logistics network. Such scenarios require the IoT terminal to be cost-competitive enough.

Therefore, in order to address these unmet IoT communication demands, there is a need to develop ultra-low-cost, extremely small-size, battery-free/maintenance-free IoT in the cellular network, and the zero-power IoT can precisely meet such requirements.

The zero-power IoT may also be referred to as ambient power enabled IoT (ambient IoT or AMP IoT for short). The zero-power device may also be referred to as an ambient IoT device or AMP IoT device. The ambient IoT device may refer to an IoT device that uses various types of ambient power (such as RF energy, light energy, solar energy, thermal energy or mechanical energy). Such devices may have no power storage capability, or may have very limited power storage capability, such as using a capacitor with tens of uF of capacitance.

The ambient IoT may be used in at least the following four scenarios:
1. object identification, such as logistics, production-line product management, and supply chain management;
2. environmental monitoring, such as temperature, humidity and harmful gas monitoring in working environments and natural environments;
3. positioning, such as indoor positioning, smart item tracking, and production-line item positioning; and
4. intelligent control, such as intelligent control of various electric appliances in smart home (turning on/off an air conditioner, and adjusting temperature), and intelligent control of various facilities in agricultural greenhouse systems (automatic irrigation and fertilization).

### II. Cellular passive IoT

With the increase of 5G industry applications, the types and application scenarios of connected objects are increasing, placing higher demands on both the cost and power consumption of communication terminals. The application of the battery-free and low-cost passive IoT device has become a key technology for the cellular IoT, which enriches the types and number of connected terminals linked to the 5G network, and truly realizes the Internet of Everything. Herein, the passive IoT device can be based on the zero-power communication technology, such as the RFID technology, and can be extended on such basis to be applicable to the cellular IoT.

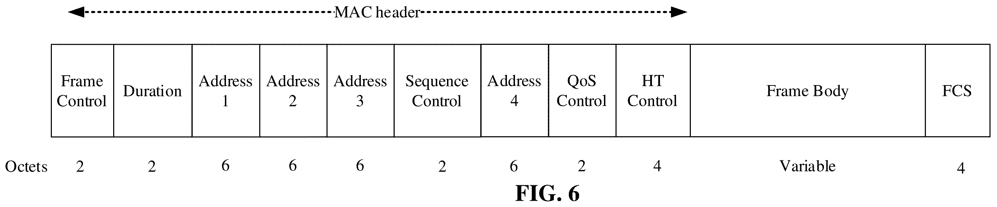

FIG. 6 illustrates a legacy media access control (MAC) frame format.

As illustrated in FIG. 6, the MAC frame may include the following fields: Frame Control (FC), duration/ID, Address 1 (A1), Address 2 (A2), Address 3 (A3), Sequence Control (SC), Address 4 (A4), Quality-of-Service Control (QoS Control), High-Throughput Control (HT Control), Frame Body and Frame Check Sequence (FCS).

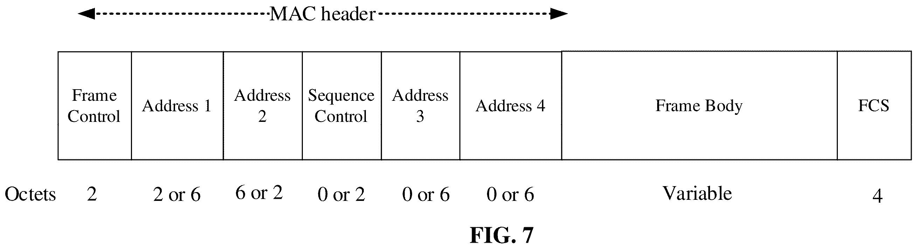

FIG. 7 illustrates a null data physical layer protocol data unit (PPDU) (NDP) MAC frame format. Compared with FIG. 6, it can be seen that, in the NDP MAC frame, some fields (e.g., the duration/ID field) are omitted, and some fields (e.g., the address field(s)) are shortened to reduce overall overhead.

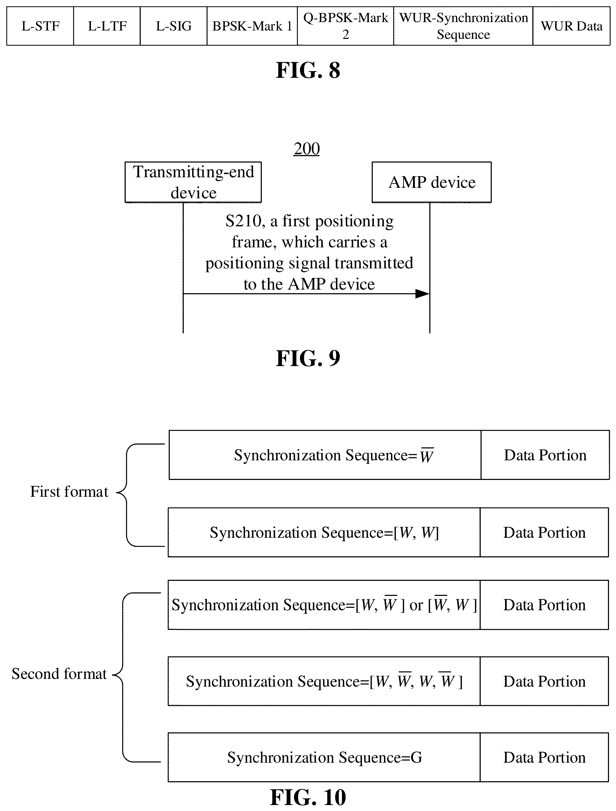

FIG. 8 is a schematic diagram of a format of a Wake Up Radio (WUR) PPDU. As illustrated in FIG. 8, a preamble portion of the PPDU includes a legacy Short Training field (L-STF), a legacy Long Training field (L-LTF), and a legacy SIGNAL field (L-SIG). Herein, a Binary Phase Shift Keying (BPSK) mark 1 (BPSK-Mark1) field and a BPSK-Mark2 field are inserted after the L-SIG field, which are used for distinguishing the WUR PPDU and the non-HT PPDU.

The positioning is an important application scenario of the AMP device. Constrained by the power consumption and cost of the device, it is impossible to perform the positioning by using the positioning reference signal with large bandwidth in the cellular positioning system. The above frame format design is not suitable for carrying the positioning signal. Therefore, when the AMP device is introduced in the communication system, how to realize the positioning of the AMP device is an urgent problem to be solved.

In order to facilitate understanding of the technical solutions of the embodiments of the present disclosure, the technical solutions of the present disclosure are described in detail below with reference to specific examples. The following related technologies may be arbitrarily combined with the technical solutions of the embodiments of the present disclosure as optional solutions, and all of which fall within the scope of protection of the embodiments of the present disclosure. The embodiments of the present disclosure include at least a part of the following contents.

FIG. 9 is a schematic interaction diagram of a method for wireless communication 200 according to an embodiment of the present disclosure. As illustrated in FIG. 9, the method 200 includes the following an operation S210.

At block S210, a transmitting-end device transmits a first positioning frame. The first positioning frame carries a positioning signal transmitted to an AMP device. That is, a receiving-end device of the positioning signal is the AMP device.

In some embodiments, the positioning signal may be used for positioning and/or ranging. For example, the positioning signal may be used for the positioning of the AMP device, or used for the positioning of the transmitting-end device. Alternatively, the positioning signal may be used to measure a distance between the AMP device and the transmitting-end device.

It should be understood that a specific method for the positioning or ranging based on the positioning signal is not limited in the embodiments of the present disclosure. For example, the positioning or ranging may be performed based on phase features of multiple positioning signals transmitted on different frequency domain resources, and the phase features may be phase differences between frequencies of the multiple positioning signals. Specifically, for example, the positioning may be performed based on a dual-frequency phase difference positioning algorithm.

It should be understood that the embodiments of the present disclosure may be applied to a WIFI system (or a system supporting the 802.11 protocol). The 802.11 protocol may include an existing 802.11 protocol (such as 802.11ah), or may also include a newly added protocol in the future 802.11 family of protocols.

In some embodiments, the transmitting-end device may be a network device in the WIFI system, such as an AP, or may be a legacy terminal in the WIFI system, such as an STA.

In the embodiments of the present disclosure, the AMP device may be referred to be an AMP IoT device or Ambient IoT device, a zero-power device, or a zero-power terminal.

In some embodiments, the AMP device may be a type of devices defined according to the features such as complexity, power consumption, power source, communication manner, used waveform of the device, and the like.

For example, the AMP device may be a device that communicates based on the ambient power. For example, the AMP device uses the ambient power (such as the radio frequency energy, light energy, solar energy, thermal energy, mechanical energy, etc.) to acquire the power for communication.

For another example, the AMP device may be a type of devices that have low complexity or use a new waveform, e.g., the device using a low-stage modulation manner or a simple waveform or a signal with a smaller bandwidth for communication, etc.

As another example, the AMP device may be a type of devices that use the back scattering communication manner.

In some embodiments, the AMP device may also support the communication manner of active transmission.

It should be understood that, in the embodiments of the present disclosure, the positioning signal may be referred to as a Positioning reference signal (PRS) or a phase positioning reference signal.

It should be understood that, in the embodiments of the present disclosure, the frame used to carry the positioning signal is referred to as the positioning frame, but the name of the positioning frame is not limited in the embodiments of the present disclosure. For example, the positioning frame may also be referred to as a positioning signal frame, or a positioning reference signal frame, etc., and the present disclosure is not limited thereto.

In some embodiments, the positioning signal may be carried in a frame body of the first positioning frame.

In some embodiments, the first positioning frame may include first indication information, and the first indication information may be used to indicate whether the first positioning frame carries the positioning signal.

For example, the first indication information may explicitly or implicitly indicate whether the first positioning frame carries the positioning signal.

Optionally, the first indication information may be carried in a frame header of the first positioning frame, and the first indication information may be used to indicate whether the frame body carries the positioning signal, or used to indicate whether the frame body carries the positioning signal or data information.

In some embodiments, the first positioning frame may further carry the configuration information of the positioning signal, and the configuration information may be used for the receiving-end device to receive the positioning signal. For example, the configuration information of the positioning signal may be used to configure a reception manner of the positioning signal, a feedback manner, information of the transmitting-end device, and the like.

Optionally, the configuration information of the positioning signal may be carried in the frame header of the first positioning frame.

In some embodiments, the configuration information of the positioning signal may include, but is not limited to, at least one of:
bandwidth information of the positioning signal;
frequency hopping information of the positioning signal;
channel information used to transmit the positioning signal; or
identifier (ID) information of the transmitting-end device of the positioning signal.

In some embodiments, the bandwidth of the positioning signal may be 200 kHz, 250 kHz, or 1 MHz, etc. The bandwidth of the positioning signal may be specifically determined according to a preset rule, for example, according to national or regional bandwidth regulations.

In some embodiments, the frequency hopping information of the positioning signal may be used to indicate whether transmission of the positioning signal is performed in a frequency hopping manner. When the transmission of the positioning signal is performed in the frequency hopping manner, the frequency hopping information may further indicate the specific frequency hopping manner, such as a frequency hopping step, that is, a frequency interval between two adjacent hops.

In some specific embodiments, the frequency hopping information of the positioning signal may include, but is not limited to, at least one of:

second indication information (i.e., frequency hopping indication), used to indicate whether transmission of the positioning signal is performed in a frequency hopping manner; or

third indication information, used to indicate a frequency interval (i.e., a frequency hopping step) for frequency hopping between two adjacent frequency points of the positioning signal when transmission of the positioning signal is performed in the frequency hopping manner.

Optionally, the frequency hopping step may be in units of KHz, MHz, or may be in units of subcarriers, subchannels or channels, which are not limited in the present disclosure.

In some embodiments, the channel information used to transmit the positioning signal may be a channel number for transmitting the positioning signal, i.e., on which channel or channels the positioning signal is transmitted.

In some embodiments, the ID information of the transmitting-end device of the positioning signal may be a partial association ID (Partial AID) or a short AID of the transmitting-end device used for transmitting the positioning signal.

Optionally, the transmitting-end device of the positioning signal may be an AP.

In some embodiments, the first positioning frame may include the fourth indication information, and the fourth indication information may be used to indicate whether feedback is required for the positioning signal (e.g., whether feedback of ACK or NACK is required). That is, the transmitting-end device may explicitly indicate that the feedback is not required for the positioning signal.

Optionally, the fourth indication information may be 1 bit. When a value of the 1 bit is 1, it is indicated that the feedback is required for the positioning signal; and when the value of the 1 bit is 0, it is indicated that the feedback is not required for the positioning signal. Alternatively, when a value of the 1 bit is 0, it is indicated that the feedback is required for the positioning signal; and when the value of the 1 bit is 1, it is indicated that the feedback is not required for the positioning signal.

In other embodiments, the feedback may be not required for positioning signal by default. For example, the transmitting-end device does not receive feedback information of the positioning signal by default, and correspondingly, the receiving-end device is not required to perform the feedback by default, when determining that the received frame is the positioning frame.

Hereinafter, the frame structure design of the first positioning frame is described with reference to specific embodiments.

### Embodiment 1: the first positioning frame implemented by a PPDU frame

In some embodiments, the first positioning frame may be the PPDU frame, and the PPDU frame may include a preamble portion and a data portion. The preamble portion may be located before the data portion, and the data portion may be used to carry the positioning signal.

In some embodiments, the PPDU frame may be a WUR PPDU frame. The WUR PPDU frame has low complexity, and can be suitable for transmission and reception by a device with low complexity. Therefore, based on the WUR PPDU frame, the PPDU frame carrying the positioning signal transmitted to the AMP device may be designed.

In some embodiments, the preamble portion may be used to indicate whether the data portion carries the positioning signal; that is, the preamble portion may be used to carry the first indication information.

For example, an existing field in the preamble portion may be used to indicate whether the data portion carries the positioning signal; or, a newly added field in the preamble field may be used to indicate whether the data portion carries the positioning signal. That is, the first indication information may be carried by using the existing field or the newly added field in the preamble portion.

Hereinafter, the design of the PPDU format in which the preamble portion indicates whether the data portion carries the positioning signal is described with reference to specific embodiments.

### Embodiment 1-1: indication by a synchronization sequence

In some embodiments, the preamble portion may include a synchronization sequence, and the synchronization sequence may be used to indicate whether the data portion carries the positioning signal. For example, whether the data portion carries the positioning signal may be implicitly indicated by a format of the synchronization sequence.

In some embodiments, the synchronization sequence being a first format may be used to indicate that the data portion does not carry the positioning signal. The synchronization sequence being a second format may be used to indicate that the data portion carries the positioning signal. When detecting the synchronization sequence being the first format, the AMP device may determine that the data portion does not carry the positioning signal. When detecting the synchronization sequence being the second format, the AMP device may determine that the data portion carries the positioning signal. In the case where the data portion carries the positioning signal, since only phase measurement related operations need to be performed on the positioning signal, the AMP device may not decode the partial data portion or the entire data portion.

In some embodiments, a length of the synchronization sequence of the first format may be identical to or different from a length of the synchronization sequence of the second format.

In some embodiments, the synchronization sequence of the first format and the synchronization sequence of the second format may be generated based on the same sequence, for example, both are generated based on the sequence W. Alternatively, the synchronization sequence of the first format and the synchronization sequence of the second format may be generated based on different sequences, for example, the synchronization sequence of the first format is generated based on the sequence W, and the synchronization sequence of the second format is generated based on the sequence G. Here, G is different from W.

For example, as illustrated in FIG. 10, the synchronization sequence of the first format may be a legacy synchronization sequence, e.g., *W̅* or [*W*, *W*]. The synchronization sequence of the second format may also be generated based on the sequence W, for example, the synchronization sequence of the second format may be [*W*, *W̅*] or [*W̅*, *W*], or the like. The length of the synchronization sequence of the second format may be identical to the length of the synchronization sequence of the first format. Alternatively, an additional sequence may be added on the basis of the synchronization sequence of the first format (i.e., the length of the synchronization sequence of the second format is longer than that of the synchronization sequence of the first format), for example, the synchronization sequence of the second format may be [*W*, *W̅*, *W*, *W̅*]. Alternatively, the synchronization sequence of the second format may also be generated based on another sequence, for example, based on G, where G is different from W.

### Embodiment 1-2: indication by adding a SIG field to the preamble portion

For example, a SIG field may be added between the synchronization sequence and the data portion, and the SIG field may be used to indicate whether the data portion carries the positioning signal.

In some embodiments, the preamble portion may further include an L-SIG field. The L-SIG field may be different from the SIG field; e.g., a bandwidth part used to transmit the SIG field is different from a bandwidth part used to transmit the L-SIG field. For example, the L-SIG field may be transmitted by using a larger bandwidth (e.g., 20M), which is used for reception by the non-AMP device (or a legacy device). Additionally, the SIG field may be transmitted by using a smaller bandwidth (e.g., 4M), which is used for reception by the AMP device.

In some embodiments, the SIG field may include a first indication field, which is used to indicate whether the data portion carries the positioning signal. That is, the first indication field may be used to carry the first indication information.

For example, different values of the first indication field may be respectively used to indicate whether the data portion carries the positioning signal.

Optionally, the first indication field may be 1 bit. When a value of the 1 bit is 1, it is indicated that the positioning signal is carried; and when the value of the 1 bit is 0, it is indicated that the positioning signal is not carried, or the data information is carried. Alternatively, when a value of the 1 bit is 0, it is indicated that the positioning signal is carried; and when the value of the 1 bit is 1, it is indicated that the positioning signal is not carried, or the data information is carried.

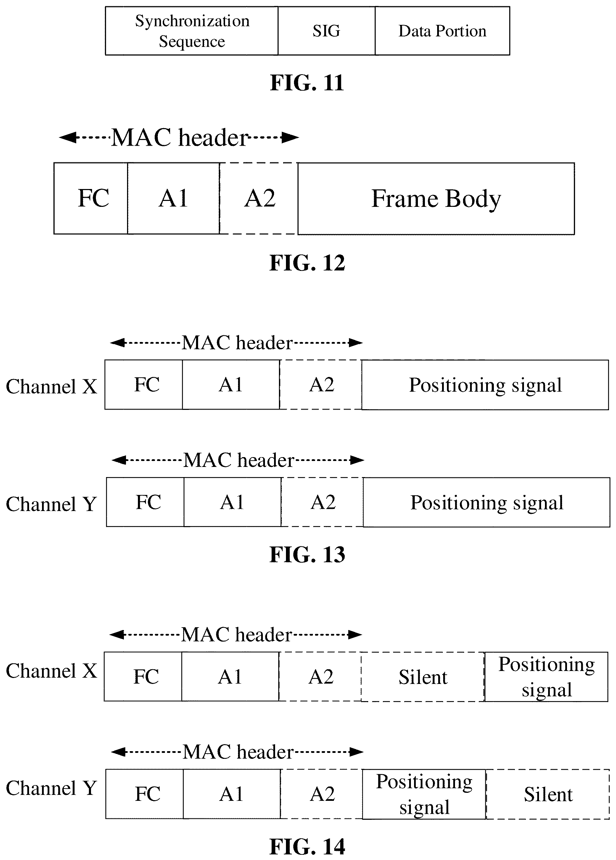

FIG. 11 is a schematic diagram of a format in which first indication information is carried by a SIG field according to an embodiment of the present disclosure. It should be understood that FIG. 11 illustrates only some of the fields of the preamble portion, and other fields may also be included before the synchronization sequence, such as the fields before the WUR-synchronization sequence in FIG. 8. In the example of FIG. 11, the SIG field may be added between the synchronization sequence and the data portion to indicate whether the data portion carries the positioning signal. Optionally, the configuration information of the positioning signal may also be carried.

It should be understood that, in the example of FIG. 11, the synchronization sequence may be the synchronization sequence of the first format or the synchronization sequence of the second format, which is not limited in the present disclosure.

In some embodiments, the SIG field may further be used to carry the configuration information of the positioning signal.

For example, the SIG field may include, but is not limited to, at least one of:
a bandwidth field, used to indicate a bandwidth of the positioning signal;
a second indication field, used to indicate whether transmission of the positioning signal is performed in the frequency hopping manner;
a frequency hopping step field, used to indicate a frequency hopping step of the positioning signal;
a channel field, used to indicate a channel on which the positioning signal is transmitted, i.e., the channel occupied by the positioning signal; or
a transmitting-end address field, used to indicate the ID of the transmitting-end device of the positioning signal, such as the Partial AID or short AID.

Optionally, the second indication field may be 1 bit. When a value of the 1 bit is 1, it is indicated that the transmission is performed in the frequency hopping manner; and when the value of the 1 bit is 0, it is indicated that the transmission is not performed in the frequency hopping manner. Alternatively, when a value of the 1 bit is 0, it is indicated that the transmission is performed in the frequency hopping manner; and when the value of the 1 bit is 1, it is indicated that the transmission is not performed in the frequency hopping manner.

In some embodiments, the SIG field may be further used to indicate the feedback manner for the positioning signal, such as whether the feedback is required for the positioning signal. That is, the SIG field may further be used to carry the fourth indication information.

For example, the SIG field may include a feedback indication field, and the feedback indication field may be used to indicate whether the feedback is required for the positioning signal.

It should be understood that the length of each of the above fields may be determined based on the size of the content to be indicated, which is not limited in the present disclosure. For example, the feedback indication field may be 1 bit, and different values of the 1 bit may be used to indicate a part of the feedback manners for the positioning signal. The length of the channel field may be determined based on the number of bits occupied by the channel number.

It should be understood that the aforementioned embodiment 1-1 and embodiment 1-2 may be implemented alone or in combination, which is not limited in the present disclosure.

For example, when the AMP device and the legacy device do not coexist, the embodiment 1-2 may be used alone; that is, when it is determined that the preamble portion includes the SIG field, the AMP device may interpret the field after the synchronization sequence as the SIG field, and further determine, based on the SIG field, whether the data portion includes the positioning signal. Optionally, the SIG field may be further used to carry the configuration information of the positioning signal. Optionally, the SIG field may be further used to indicate whether the feedback is required for the positioning signal.

For another example, when the AMP device and the legacy device coexist, the embodiment 1-1 and embodiment 1-2 may be used in combination. As such, the legacy device may be informed, based on the synchronization sequence in the preamble portion, that the SIG field is inserted after the synchronization sequence; then, the legacy device may determine, based on the synchronization sequence, whether the data portion carries the positioning signal. In the case that the data portion carries the positioning signal, the legacy device may not receive the SIG field and the subsequent data portion. The AMP device may determine, based on the synchronization sequence and/or SIG field in the preamble portion, whether the data portion carries the positioning signal. Furthermore, in the case that the data portion carries the positioning signal, the AMP device may receive the positioning signal. Optionally, the AMP device may acquire the configuration information of the positioning signal from the SIG field, and further receive the positioning signal based on the configuration information.

### Embodiment 2: the first positioning frame implemented by a MAC frame.

In some embodiments, the first positioning frame may be the MAC frame, and the MAC frame may include a MAC header and a frame body. The MAC header may be located before the frame body, and the frame body may be used to carry the positioning signal.

In some embodiments, the MAC header may be used to indicate whether the frame body carries the positioning signal; that is, the MAC header may be used to carry the first indication information.

For example, an existing field in the MAC header may be used to indicate whether the frame body carries the positioning signal; or, a newly added field in the MAC header may be used to indicate whether the frame body carries the positioning signal. That is, the first indication information may be carried by using the existing field or the newly added field in the MAC header.

In some embodiments, whether the frame body carries the positioning signal may be indicated by an FC field in the MAC header.

That is, the first indication information may be carried by the FC field.

In some embodiments, the FC field may be set to a reserved value for indicating that the frame body carries the positioning signal.

For example, the FC field may 2 bits. The 2 bits may be set to 10 or 11 for indicating that the frame body carries the positioning signal, and the 2 bits may be set to 00 or 01 for indicating that the frame body does not carry the positioning signal.

In some embodiments, the MAC header may include a first address (i.e., A1) field, and the first address field may be used to carry an address of the transmitting-end device of the positioning signal, for example, a compressed ID of the transmitting-end device, such as the Partial AID or short AID.

In some embodiments, the first address field may be further used to carry the configuration information of the positioning signal.

In some embodiments, the first address field may include, but is not limited to, at least one of:
a bandwidth field, used to indicate a bandwidth of the positioning signal;
a second indication field, used to indicate whether transmission of the positioning signal is performed in the frequency hopping manner;
a frequency hopping step field, used to indicate a frequency hopping step of the positioning signal;
a channel field, used to indicate a channel on which the positioning signal is transmitted, i.e., the channel occupied by the positioning signal; or
a transmitting-end address field, used to indicate the ID of the transmitting-end device of the positioning signal, such as the Partial AID or short AID.

In some embodiments, the first address field may be further used to indicate the feedback manner for the positioning signal, such as whether the feedback is required for the positioning signal. That is, the first address field may further be used to carry the fourth indication information.

For example, the first address field may include a feedback indication field, and the feedback indication field may be used to indicate whether feedback is required for the positioning signal.

It should be understood that the length of each of the above fields may be determined based on the size of the content to be indicated, which is not limited in the present disclosure. For example, the second indication field may be 1 bit, and different values of the 1 bit may be used to indicate whether the transmission of the positioning signal is performed in the frequency hopping manner. Similarly, the feedback indication field may also be 1 bit, and the length of the channel field may be determined based on the number of bits occupied by the channel number.

In some embodiments, a second address (i.e., A2) field may or may not be included in the MAC header.

In some embodiments, the first address field may include an ID field, and the ID field may be used to indicate whether the MAC header includes the second address (i.e., A2) field. The second address field may be used to carry an address of a receiving-end device of the MAC frame, for example, a compressed ID of the receiving-end device, such as the Partial AID or short AID.

In some embodiments, the MAC header may not include a SC field.

In some embodiments, the MAC frame may not include a FCS field. This is because that the decoding for the positioning signal is not required.

FIG. 12 illustrates a MAC frame format carrying a positioning signal. As illustrated in FIG. 12, the MAC header of the MAC frame may include an FC field, an A1 field, an A2 (optional) field and a frame body, and may not include a SC field and a FCS field.

Herein, the FC field may be used to indicate whether the frame body carries the positioning signal. For example, the value of 10 or 11 of the FC field may be used to indicate that the frame body carries the positioning signal.

The A1 field may be used to indicate the address of the transmitting-end device of the positioning signal. Optionally, the A1 field may further be used to indicate the configuration information of the positioning signal. Optionally, the A1 field may further be used to indicate whether the MAC frame includes the A2 field. Optionally, the A1 field may further be used to indicate whether the feedback is required for the positioning signal.

In some embodiments, the length of the frame body of the MAC frame is a fixed length. Optionally, the frame body of the MAC frame may have multiple fixed lengths.

Specifically, since the positioning signal is transmitted/received through the frame body and the positioning signal is only used for positioning, the length of the frame body carrying the positioning signal may be a fixed length. Alternatively, there may be multiple fixed lengths, e.g., frame bodies with different fixed lengths correspond to different positioning signals.

In some embodiments, the transmitting-end device may transmit multiple positioning signals, and frequency information of the multiple positioning signals may be used for positioning based on phase difference(s). In such case, the positioning frames carrying the multiple positioning signals may be transmitted on different frequency domain resources.

For example, the transmitting-end device may transmit the first positioning frame on the first frequency domain resource, and transmit the second positioning frame on the second frequency domain resource. The first frequency domain resource and the second frequency domain resource may be different frequency domain resources, and a phase feature of the positioning signal carried in the first positioning frame and a phase feature of the positioning signal carried in the second positioning frame may be used for the positioning of the AMP device.

In some embodiments, the first frequency domain resource and the second frequency domain resource may be different channels; or, may be different sub-channels in the same channel, different sub-carriers in the same channel, or the like.

In some embodiments, the positioning signal in the first positioning frame and the positioning signal in the second positioning frame may be transmitted simultaneously.

For example, as illustrated in FIG. 13, the transmitting-end device may simultaneously transmit the positioning signals on different channels.

In some embodiments, the positioning signal in the first positioning frame and the positioning signal in the second positioning frame may be transmitted in time division.

For example, as illustrated in FIG. 14, the transmitting-end device may transmit the positioning signals on different channels in time division. For example, when transmitting the positioning signal on a channel X, the transmitting-end device is silent on a channel Y; and when transmitting the positioning signal on the channel Y, the transmitting-end device is silent on the channel X.

It should be understood that, in the embodiment 2, the preamble portion of the PPDU corresponding to the MAC frame may adopt the format of the preamble portion of the PPDU in the embodiment 1, or may adopt the format of the preamble portion of another PPDU, which is not limited in the present disclosure.

It should be noted that the embodiment 1 and the embodiment 2 may be implemented alone or in combination. For example, the data portion of the PPDU in the embodiment 1 may adopt the MAC frame design in the embodiment 2, or the first indication information and the configuration information of the positioning signal may be carried by the preamble portion and the MAC header, respectively.

For example, the transmitting-end device may indicate, through the preamble portion (e.g., the synchronization sequence and/or the SIG field) of the PPDU, whether the MAC frame body carries the positioning signal; and may further indicate, through the A1 field of the MAC header, the configuration information of the positioning signal.

For another example, the transmitting-end device may indicate, through the FC field of the MAC header, whether the MAC frame body carries the positioning signal; and may further indicate, through the SIG field of the PPDU, the configuration information of the positioning signal.

To sum up, in the embodiments of the present disclosure, the positioning frame capable of carrying the positioning signal is designed, and the transmitting-end device can transmit the positioning frame carrying the positioning signal to the AMP device, thereby implementing the positioning of the AMP device.

In some implementations, the positioning frame may be the PPDU frame, and it may be indicated, through the preamble portion of the PPDU frame, that the data portion of the PPDU frame carries the positioning signal. For example, whether the data portion of the PPDU frame carries the positioning signal may be indicated through the synchronization sequence and/or the SIG field in the preamble portion. Optionally, the configuration information of the positioning signal may be carried through the SIG field. Optionally, the feedback manner for the positioning signal may be further indicated through the SIG field.

In other implementations, the positioning frame may be the MAC frame, e.g., it may be indicated, through the MAC header, that the MAC frame body carries the positioning signal. For example, whether the MAC frame body carries the positioning signal may be indicated through the FC field of the MAC header. Optionally, the configuration information of the positioning signal may be carried through the A1 field of the MAC header. Optionally, the feedback manner for the positioning signal may be further indicated through the A1 field.

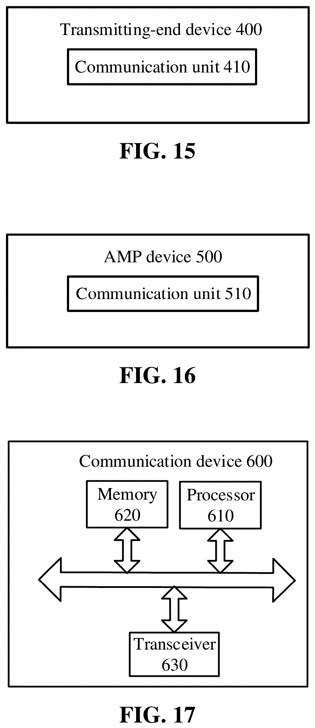

The method embodiments of the present disclosure are described in detail with reference to FIGS. 9 to 14, and the device embodiments of the present disclosure are described in detail with reference to FIGS. 15 to 19 below. It should be understood that the device embodiments and the method embodiments correspond to each other, and similar descriptions may be made with reference to the above method embodiments.

FIG. 15 illustrates a schematic block diagram of a transmitting-end device 400 according to an embodiment of the present disclosure. As illustrated in FIG. 15, the transmitting-end device 400 includes a communication unit 410.

The communication unit 410 is configured to transmit a first positioning frame. The first positioning frame carries a positioning signal, and the positioning signal is used for positioning of an AMP device.

In some embodiments, the first positioning frame may include first indication information, and the first indication information may be used to indicate whether the first positioning frame carries the positioning signal.

In some embodiments, the first positioning frame may include configuration information of the positioning signal.

In some embodiments, the configuration information of the positioning signal may include at least one of:
bandwidth information of the positioning signal;
frequency hopping information of the positioning signal;
channel information used to transmit the positioning signal; or
identifier (ID) information of the transmitting-end device of the positioning signal.

In some embodiments, the bandwidth information of the positioning signal may be used to indicate that the bandwidth of the positioning signal is 200 kHz, 250 kHz, or 1 MHz.

In some embodiments, the frequency hopping information of the positioning signal may include at least one of:
second indication information, used to indicate whether transmission of the positioning signal is performed in a frequency hopping manner; or
third indication information, used to indicate a frequency interval for frequency hopping between two adjacent frequency points of the positioning signal when transmission of the positioning signal is performed in the frequency hopping manner.

In some embodiments, the ID information of the transmitting-end device of the positioning signal may be a partial AID of the transmitting-end device.

In some embodiments, the first positioning frame may include fourth indication information, and the fourth indication information may be used to indicate whether feedback is required for the positioning signal.

In some embodiments, the first positioning frame may be a PPDU frame, the PPDU frame may include a preamble portion and a data portion, the preamble portion may be located before the data portion, and the data portion may be used to carry the positioning signal.

In some embodiments, the preamble portion may include a synchronization sequence, and the synchronization sequence may be used to indicate whether the data portion carries the positioning signal; and/or
the preamble portion may include a SIG field, and the SIG field may be used to indicate whether the data portion carries the positioning signal.

In some embodiments, a format of the synchronization sequence may be used to indicate whether the data portion carries the positioning signal.

In some embodiments, the synchronization sequence being a first format may be used to indicate that the data portion does not carry the positioning signal; the synchronization sequence being a second format may be used to indicate that the data portion carries the positioning signal.

In some embodiments, a length of the synchronization sequence of the first format may be identical to or different from a length of the synchronization sequence of the second format.

In some embodiments, the synchronization sequence of the first format and the synchronization sequence of the second format may be generated based on the same sequence; or the synchronization sequence of the first format and the synchronization sequence of the second format may be generated based on different sequences.

In some embodiments, the SIG field may be located between the synchronization sequence and the data portion.

In some embodiments, the SIG field may be further used to carry configuration information of the positioning signal.

In some embodiments, the SIG field may be further used to carry fourth indication information, and the fourth indication information is used to indicate whether feedback is required for the positioning signal.

In some embodiments, the PPDU frame may be a WUR PPDU frame.

In some embodiments, the first positioning frame may be a MAC frame, the MAC frame may include a MAC header and a frame body, the MAC header may be located before the frame body, and the frame body may be used to carry the positioning signal.

In some embodiments, the MAC header may be used to carry the first indication information, and the first indication information may be used to indicate whether the frame body carries the positioning signal.

In some embodiments, the MAC header may include a FC field, and the FC field may be used to carry the first indication information.

In some embodiments, the FC field may be set to a reserved value for indicating that the frame body carries the positioning signal.

In some embodiments, the MAC header may include a first address field, and the first address field may be used to carry an address of the transmitting-end device of the MAC frame.

In some embodiments, the first address field may be further used to carry configuration information of the positioning signal.

In some embodiments, the first address field may include an ID field, the ID field may be used to indicate whether the MAC header includes the second address field, and the second address field may be used to carry an address of a receiving-end device of the MAC frame.

In some embodiments, the first address field may include a feedback indication field, and the feedback indication field may be used to indicate whether feedback is required for the positioning signal.

In some embodiments, the MAC header may not include a SC field.

In some embodiments, the MAC frame may not include a FCS field.

In some embodiments, a length of the frame body of the MAC frame may be a fixed length.

In some embodiments, the fixed length may be one of multiple preset fixed lengths.

In some embodiments, the communication unit 410 may be further configured to: transmit the second positioning frame.

The first positioning frame and the second positioning frame may be transmitted on different frequency domain resources, and a phase feature of the positioning signal carried in the first positioning frame and a phase feature of a positioning signal carried in the second positioning frame may be used for the positioning of the AMP device.

In some embodiments, the positioning signal in the first positioning frame and the positioning signal in the second positioning frame may be transmitted simultaneously; or, the positioning signal in the first positioning frame and the positioning signal in the second positioning frame may be transmitted in time division.

In some embodiments, the communication unit 410 is further configured to: not receive feedback information of the positioning signal, in a case that the transmitting-end device indicates that the AMP device is not required to feed back for the positioning signal, or the transmitting-end device does not indicate whether the AMP device is required to feed back for the positioning signal.

In some embodiments, the transmitting-end device may be an access point device or a station device.

Optionally, in some embodiments, the aforementioned communication unit may be a communication interface or a transceiver, or an input/output interface of a communication chip or a system-on-chip. The above processing unit may be one or more processors.

It should be understood that the transmitting-end device 400 according to the embodiments of the present disclosure may correspond to the transmitting-end device in the above method embodiments of the present disclosure. The above and other operations and/or functions of respective units in the transmitting-end device 400 are used to implement the corresponding operations of the transmitting-end device in the method 200 illustrated in FIGS. 9 to 14, which are not described repeatedly herein for the sake of conciseness.

FIG. 16 is a schematic block diagram of an AMP device according to an embodiment of the present disclosure. The AMP device 500 of FIG. 16 includes a communication unit 510.

The communication unit 510 is configured to receive a first positioning frame. The first positioning frame carries a positioning signal, and the positioning signal is used for positioning of the AMP device.

In some embodiments, the first positioning frame may include the first indication information, and the first indication information may be used to indicate whether the first positioning frame carries the positioning signal.

In some embodiments, the first positioning frame may include configuration information of the positioning signal.

In some embodiments, the configuration information of the positioning signal may include at least one of:
bandwidth information of the positioning signal;
frequency hopping information of the positioning signal;
channel information used to transmit the positioning signal; or
identifier (ID) information of the transmitting-end device of the positioning signal.

In some embodiments, the bandwidth information of the positioning signal may be used to indicate that the bandwidth of the positioning signal is 200 kHz, 250 kHz, or 1 MHz.

In some embodiments, the frequency hopping information of the positioning signal may include at least one of:
second indication information, used to indicate whether transmission of the positioning signal is performed in a frequency hopping manner; or
third indication information, used to indicate a frequency interval for frequency hopping between two adjacent frequency points of the positioning signal when transmission of the positioning signal is performed in a frequency hopping manner.

In some embodiments, the ID information of the transmitting-end device of the positioning signal may be a partial AID of the transmitting-end device.

In some embodiments, the first positioning frame may include fourth indication information, and the fourth indication information may be used to indicate whether feedback is required for the positioning signal.

In some embodiments, the first positioning frame is a PPDU frame, the PPDU frame may include a preamble portion and a data portion, the preamble portion may be located before the data portion, and the data portion may be used to carry the positioning signal.

In some embodiments, the preamble portion may include a synchronization sequence, and the synchronization sequence may be used to indicate whether the data portion carries the positioning signal; and/or
the preamble portion may include a SIG field, and the SIG field may be used to indicate whether the data portion carries the positioning signal.

In some embodiments, a format of the synchronization sequence may be used to indicate whether the data portion carries the positioning signal.

In some embodiments, the synchronization sequence being the first format may be used to indicate that the data portion does not carry the positioning signal; the synchronization sequence being the second format may be used to indicate that the data portion carries the positioning signal.

In some embodiments, a length of the synchronization sequence of the first format may be identical to or different from a length of the synchronization sequence of the second format.

In some embodiments, the synchronization sequence of the first format and the synchronization sequence of the second format may be generated based on the same sequence; or, the synchronization sequence of the first format and the synchronization sequence of the second format may be generated based on different sequences.

In some embodiments, the SIG field may be located between the synchronization sequence and the data portion.

In some embodiments, the SIG field may be further used to carry configuration information of the positioning signal.

In some embodiments, the SIG field may be further used to carry fourth indication information, and the fourth indication information may be used to indicate whether feedback is required for the positioning signal.

In some embodiments, the PPDU frame may be a WUR PPDU frame.

In some embodiments, the first positioning frame may be a MAC frame, the MAC frame may include a MAC header and a frame body, the MAC header may be located before the frame body, and the frame body may be used to carry the positioning signal.

In some embodiments, the MAC header may be used to carry the first indication information, and the first indication information may be used to indicate whether the frame body carries the positioning signal.

In some embodiments, the MAC header may include a FC field, and the FC field may be used to carry the first indication information.

In some embodiments, the FC field may be set to a reserved value for indicating that the frame body carries the positioning signal.

In some embodiments, the MAC header may include a first address field, and the first address field may be used to carry an address of the transmitting-end device of the MAC frame.

In some embodiments, the first address field may be further used to carry configuration information of the positioning signal.

In some embodiments, the first address field may include an ID field, the ID field may be used to indicate whether the MAC header include a second address field, and the second address field may be used to carry an address of a receiving-end device of the MAC frame.

In some embodiments, the first address field may include a feedback indication field, and the feedback indication field may be used to indicate whether feedback is required for the positioning signal.

In some embodiments, the MAC header may not include a SC field.

In some embodiments, the MAC frame may not include a FCS field.

In some embodiments, a length of the frame body of the MAC frame may be a fixed length.

In some embodiments, the fixed length may be one of multiple preset fixed lengths.

In some embodiments, the communication unit 510 may be further configured to receive a second positioning frame. The first positioning frame and the second positioning frame may be transmitted on different frequency domain resources.

In some embodiments, the positioning signal in the first positioning frame and the positioning signal in the second positioning frame may be transmitted simultaneously; or, the positioning signal in the first positioning frame and the positioning signal in the second positioning frame may be transmitted in time division.

In some embodiments, the communication unit 510 may be further configured to: not transmit feedback information for the positioning signal, in a case that a transmitting-end device of the positioning signal indicates that the AMP device is not required to feed back for the positioning signal, or the transmitting-end device does not indicate whether the AMP device is required to feed back for the positioning signal.

In some embodiments, the transmitting-end device may be an access point device or a station device.

Optionally, in some embodiments, the aforementioned communication unit may be a communication interface or a transceiver, or an input/output interface of a communication chip or a system-on-chip. The above processing unit may be one or more processors.

It should be understood that the AMP device 500 according to the embodiments of the present disclosure may correspond to the AMP device in the above method embodiments of the present disclosure. The above and other operations and/or functions of respective units in the AMP device 500 are used to implement the corresponding operations of the AMP device in the method 200 illustrated in FIGS. 9 to 14, which are not described repeatedly herein for the sake of conciseness.

FIG. 17 is a schematic structural diagram of a communication device 600 according to an embodiment of the present disclosure. The communication device 600 illustrated in FIG. 17 includes a processor 610. The processor may call and run a computer program from a memory to implement each of the methods in the embodiments of the present disclosure.

Optionally, as illustrated in FIG. 17, the communication device 600 may further include a memory 620. Here, the processor 610 may call and run a computer program from the memory 620 to implement each of the methods in the embodiments of the present disclosure.

Herein, the memory 620 may be a separate device independent of the processor 610 or may be integrated in the processor 610.

Optionally, as illustrated in FIG. 17, the communication device 600 may further include a transceiver 630. The processor 610 may control the transceiver 630 to communicate with other devices. Specifically, the processor 610 may control the transceiver 630 to send information or data to other devices, or receive information or data from other devices.

Herein, the transceiver 630 may include a transmitter and a receiver. The transceiver 630 may further include one or more antennas.

Optionally, the communication device 600 may specifically be the transmitting-end device according to the embodiments of the present disclosure, and the communication device 600 may implement the corresponding processes implemented by the transmitting-end device in each of the methods according to the embodiments of the present disclosure, which are not described repeatedly herein for the sake of conciseness.

Optionally, the communication device 600 may be the AMP device according to the embodiments of the present disclosure, and the communication device 600 may implement the corresponding processes implemented by the AMP device in each of the methods according to the embodiments of the present disclosure, which are not described repeatedly herein for the sake of conciseness.

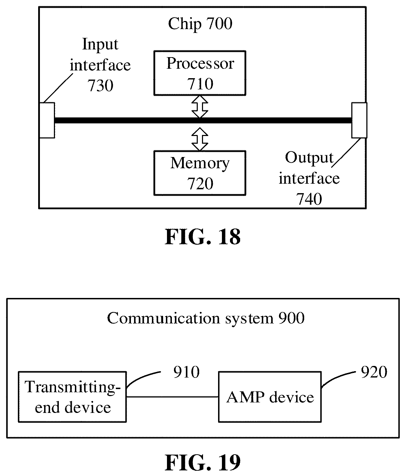

FIG. 18 is a schematic structural diagram of a chip according to an embodiment of the present disclosure. The chip 700 illustrated in FIG. 18 includes a processor 710. The processor may call and run a computer program from a memory to implement each of the methods in the embodiments of the present disclosure.

Optionally, as illustrated in FIG. 18, the chip 700 may further include a memory 720. Here, the processor 710 may call and run a computer program from the memory 720 to implement each of the methods in the embodiments of the present disclosure.

Herein, the memory 720 may be a separate device independent of the processor 710 or may be integrated in the processor 710.

Optionally, the chip 700 may further include an input interface 730. Herein, the processor 710 may control the input interface 730 to communicate with other devices or chips, specifically, may acquire information or data from other devices or chips.

Optionally, the chip 700 may further include an output interface 740. Herein, the processor 710 may control the output interface 740 to communicate with other devices or chips, specifically, may output information or data to other devices or chips.

Optionally, the chip may be applied to the transmitting-end device in the embodiments of the present disclosure, and the chip may implement the corresponding processes implemented by the transmitting-end device in each of the methods of the embodiments of the present disclosure, which are not described repeatedly herein for the sake of conciseness.

Optionally, the chip may be applied to the AMP device in the embodiments of the present disclosure, and the chip may implement the corresponding processes implemented by the AMP device in each of the methods of the embodiments of the present disclosure, which are not described repeatedly herein for the sake of conciseness.

It should be understood that the chip mentioned in the embodiments of the present disclosure may also be referred to as a system level chip, a system chip, a chip system, a system-on-chip, and the like.

FIG. 19 is a schematic block diagram of a communication system 900 according to an embodiment of the present disclosure. As illustrated in FIG. 19, the communication system 900 includes a transmitting-end device 910 and an AMP device 920.

Herein, the transmitting-end device 910 may be used to implement the corresponding functions implemented by the transmitting-end device in each of the aforementioned methods, and the AMP device 920 may be used to implement the corresponding functions implemented by the AMP device in each of the aforementioned methods, which are not described repeatedly herein for the sake of conciseness.

It should be understood that the processor of the embodiments of the present disclosure may be an integrated circuit chip having signal processing capabilities. In the implementation process, the operations of the foregoing method embodiments may be completed by integrated logic circuits of hardware in the processor or instructions in the form of software. The processor described above may be a general-purpose processor, a Digital Signal Processor (DSP), an Application Specific Integrated Circuit (ASIC), a Field Programmable Gate Array (FPGA) or other programmable logic device, a discrete gate or transistor logic device, or a discrete hardware component. The methods, operations, and logical block diagrams disclosed in the embodiments of the present disclosure may be implemented or executed. The general- purpose processor may be a microprocessor or the processor may be any conventional processor or the like. The operations of the method(s) disclosed in connection with the embodiments of the present disclosure may be directly embodied as execution by the hardware decoding processor, or may be executed by combining hardware and software modules in the decoding processor. The software module may be located in a storage medium mature in the art, such as random access memory, flash memory, read-only memory, programmable read-only memory, or electrically erasable programmable memory, registers, etc. The storage medium is located in the memory, and the processor reads the information in the memory, and combines its hardware to complete the operations of the above method.

It is understood that the memory in the embodiments of the present disclosure may be a volatile memory or a non-volatile memory, or may include both volatile and non-volatile memories. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of illustration but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memories.

It should be understood that the above memory is illustrative but not limiting, for example, the memory in the embodiments of the present disclosure may also be a SRAM, a DRAM, a SDRAM, a DDR SDRAM, an ESDRAM, a SLDRAM, a DR RAM, and the like. That is, the memory in the embodiments of the present disclosure is intended to include, but is not limited to, these and any other suitable type of memories.

Embodiments of the present disclosure further provide a computer-readable storage medium, which is used for storing a computer program.

Optionally, the computer-readable storage medium may be applied to the transmitting-end device in the embodiments of the present disclosure, and the computer program enables the computer to perform the corresponding processes implemented by the transmitting-end device in each of the methods in the embodiments of the present disclosure, which are not described repeatedly herein for the sake of conciseness.

Optionally, the computer-readable storage medium may be applied to the AMP device in the embodiments of the present disclosure, and the computer program enables the computer to execute the corresponding processes implemented by the AMP device in each of the methods of the embodiments of the present disclosure, which are not described repeatedly herein for the sake of conciseness.

Embodiments of the present disclosure further provide a computer program product, which includes computer program instructions.

Optionally, the computer program product may be applied to the transmitting-end device in the embodiments of the present disclosure, and the computer program instructions enable the computer to perform the corresponding processes implemented by the transmitting-end device in each of the methods in the embodiments of the present disclosure, which are not described repeatedly herein for the sake of conciseness.

Optionally, the computer program product may be applied to the AMP device in the embodiments of the present disclosure, and the computer program instructions enable the computer to perform the corresponding processes implemented by the AMP device in each of the methods of the embodiments of the present disclosure, which are not described repeatedly herein for the sake of conciseness.

Embodiments of the present disclosure further provide a computer program.

Optionally, the computer program may be applied to the transmitting-end device in the embodiments of the present disclosure, and when the computer program is executed on the computer, the computer is enabled to perform the corresponding processes implemented by the transmitting-end device in each of the methods in the embodiments of the present disclosure, which are not described repeatedly herein for the sake of conciseness.

Optionally, the computer program may be applied to the AMP device in the embodiments of the present disclosure, and when the computer program is executed on the computer, the computer is enabled to perform the corresponding processes implemented by the AMP device in each of the methods of the embodiments of the present disclosure, which are not described repeatedly herein for the sake of conciseness.

Those of ordinary skill in the art will appreciate that the elements and algorithmic steps of the various examples described in connection with the embodiments disclosed herein may be implemented in electronic hardware, or a combination of computer software and electronic hardware. Whether these functions are performed in hardware or software depends on the specific application and design constraints of the technical solution. Those skilled in the art may use different methods for implementing the described functions for each particular application, but such implementations should not be considered beyond the scope of the present disclosure.

Those skilled in the art can clearly understand that for convenience and conciseness of the description, the specific working processes of the systems, apparatus, and units described above may refer to the corresponding processes in the aforementioned method embodiments, which will not be described herein for the sake of conciseness.

In several embodiments provided herein, it should be understood that the disclosed systems, apparatus, and methods may be implemented in other ways. For example, the apparatus embodiment described above is merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, apparatus or unit, which may be electrical, mechanical or otherwise.

The units described as separate units may or may not be physically separate, and the units displayed as units may or may not be physical units, that is, they may be located in one place or may be distributed over multiple network units. Some or all of the units may be selected according to actual needs to achieve the purpose of the solutions of the present embodiment.

In addition, various functional units in various embodiments of the present disclosure may be integrated in one processing unit, each unit may be physically present alone, or two or more units may be integrated in one unit.

The functions may be stored in a computer readable storage medium if implemented in the form of software functional units and sold or used as independent products. Based on this understanding, the technical solution of the present disclosure essentially or a part that contributes to the prior art or a part of the technical solution may be embodied in the form of a software product, which is stored in a storage medium and includes several instructions for causing a computer device (which may be a personal computer, a server, or a network device, etc.) to perform all or part of the operations of the method described in various embodiments of the present disclosure. The storage medium includes a USB disk, a removable hard disk, a Read-Only Memory (ROM), a Random Access Memory (RAM), a magnetic disk, or an optical disk that can store a program code.

The above is merely specific embodiments of the present disclosure, but the scope of protection of the present disclosure is not limited thereto, and any person skilled in the art may easily think of changes or substitutions within the technical scope disclosed in the present disclosure, which should be covered within the scope of protection of the present disclosure. Therefore, the scope of protection of the present disclosure should be based on the scope of protection of the claims.

## Claims

1. A method for wireless communication, comprising:
transmitting, by a transmitting-end device, a first positioning frame, wherein the first positioning frame carries a positioning signal, and the positioning signal is used for positioning of an ambient power (AMP) device.

2. The method of claim 1, wherein the first positioning frame comprises first indication information, and the first indication information is used to indicate whether the first positioning frame carries the positioning signal.

3. The method of claim 1 or 2, wherein the first positioning frame comprises configuration information of the positioning signal.

4. The method of claim 3, wherein the configuration information of the positioning signal comprises at least one of:
bandwidth information of the positioning signal;
frequency hopping information of the positioning signal;
channel information used to transmit the positioning signal; or
identifier (ID) information of the transmitting-end device of the positioning signal.

5. The method of claim 4, wherein the bandwidth information of the positioning signal is used to indicate that bandwidth of the positioning signal is 200 kHz, 250 kHz, or 1 MHz.

6. The method of claim 4 or 5, wherein the frequency hopping information of the positioning signal comprises at least one of:
second indication information, used to indicate whether transmission of the positioning signal is performed in a frequency hopping manner; or
third indication information, used to indicate a frequency interval for frequency hopping between two adjacent frequency points of the positioning signal when transmission of the positioning signal is performed in a frequency hopping manner.

7. The method of any one of claims 4 to 6, wherein the ID information of the transmitting-end device of the positioning signal is a partial association ID (AID) of the transmitting-end device.

8. The method of any one of claims 1 to 7, wherein the first positioning frame comprises fourth indication information, and the fourth indication information is used to indicate whether feedback is required for the positioning signal.

9. The method of any one of claims 1 to 8, wherein the first positioning frame is a physical layer protocol data unit (PPDU) frame, the PPDU frame comprises a preamble portion and a data portion, the preamble portion is located before the data portion, and the data portion is used to carry the positioning signal.

10. The method of claim 9, wherein the preamble portion comprises a synchronization sequence, and the synchronization sequence is used to indicate whether the data portion carries the positioning signal; and/or
the preamble portion comprises a signal (SIG) field, and the SIG field is used to indicate whether the data portion carries the positioning signal.

11. The method of claim 10, wherein a format of the synchronization sequence is used to indicate whether the data portion carries the positioning signal.

12. The method of claim 11, wherein the synchronization sequence being a first format is used to indicate that the data portion does not carry the positioning signal; the synchronization sequence being a second format is used to indicate that the data portion carries the positioning signal.

13. The method of claim 12, wherein a length of the synchronization sequence of the first format is identical to or different from a length of the synchronization sequence of the second format.

14. The method of claim 12 or 13, wherein the synchronization sequence of the first format and the synchronization sequence of the second format are generated based on a same sequence, or the synchronization sequence of the first format and the synchronization sequence of the second format are generated based on different sequences.

15. The method of any one of claims 10 to 14, wherein the SIG field is located between the synchronization sequence and the data portion.

16. The method of any one of claims 10 to 15, wherein the SIG field is further used to carry configuration information of the positioning signal.

17. The method of any one of claims 10 to 16, wherein the SIG field is further used to carry fourth indication information, and the fourth indication information is used to indicate whether feedback is required for the positioning signal.

18. The method of any one of claims 9 to 17, wherein the PPDU frame is a wake up radio (WUR) PPDU frame.

19. The method of any one of claims 1 to 18, wherein the first positioning frame is a media access control (MAC) frame, the MAC frame comprises a MAC header and a frame body, the MAC header is located before the frame body, and the frame body is used to carry the positioning signal.

20. The method of claim 19, wherein the MAC header is used to carry first indication information, and the first indication information is used to indicate whether the frame body carries the positioning signal.

21. The method of claim 20, wherein the MAC header comprises a frame control (FC) field, and the FC field is used to carry the first indication information.

22. The method of claim 21, wherein the FC field is set to a reserved value for indicating that the frame body carries the positioning signal.

23. The method of any one of claims 19 to 22, wherein the MAC header comprises a first address field, and the first address field is used to carry an address of the transmitting-end device of the MAC frame.

24. The method of claim 23, wherein the first address field is further used to carry configuration information of the positioning signal.

25. The method of claim 23 or 24, wherein the first address field comprises an ID field, the ID field is used to indicate whether the MAC header comprises a second address field, and the second address field is used to carry an address of a receiving-end device of the MAC frame.

26. The method of any one of claims 23 to 25, wherein the first address field comprises a feedback indication field, and the feedback indication field is used to indicate whether feedback is required for the positioning signal.

27. The method of any one of claims 19 to 26, wherein the MAC header does not comprise a sequence control (SC) field.

28. The method of any one of claims 19 to 27, wherein the MAC frame does not comprise a frame check sequence (FCS) field.

29. The method of any one of claims 19 to 28, wherein a length of the frame body of the MAC frame is a fixed length.

30. The method of claim 29, wherein the fixed length is one of a plurality of preset fixed lengths.

31. The method of any one of claims 1 to 30, further comprising:
transmitting, by the transmitting-end device, a second positioning frame, wherein the first positioning frame and the second positioning frame are transmitted on different frequency domain resources, and a phase feature of the positioning signal carried in the first positioning frame and a phase feature of a positioning signal carried in the second positioning frame are used for the positioning of the AMP device.

32. The method of claim 31, wherein the positioning signal in the first positioning frame and the positioning signal in the second positioning frame are transmitted simultaneously; or, the positioning signal in the first positioning frame and the positioning signal in the second positioning frame are transmitted in time division.

33. The method of any one of claims 1 to 32, further comprising:
in a case that the transmitting-end device indicates that the AMP device is not required to feed back for the positioning signal, or the transmitting-end device does not indicate whether the AMP device is required to feed back for the positioning signal, not receiving, by the transmitting-end device, feedback information of the positioning signal.

34. The method of any one of claims 1 to 33, wherein the transmitting-end device is an access point device or a station device.

35. A method for wireless communication, comprising:
receiving, by a ambient power (AMP) device, a first positioning frame, wherein the first positioning frame carries a positioning signal, and the positioning signal is used for positioning of the AMP device.

36. The method of claim 35, wherein the first positioning frame comprises first indication information, and the first indication information is used to indicate whether the first positioning frame carries the positioning signal.

37. The method of claim 35 or 36, wherein the first positioning frame comprises configuration information of the positioning signal.

38. The method of claim 37, wherein the configuration information of the positioning signal comprises at least one of:
bandwidth information of the positioning signal;
frequency hopping information of the positioning signal;
channel information used to transmit the positioning signal; or
identifier (ID) information of a transmitting-end device of the positioning signal.

39. The method of claim 38, wherein the bandwidth information of the positioning signal is used to indicate that bandwidth of the positioning signal is 200 kHz, 250 kHz, or 1 MHz.

40. The method of claim 38 or 39, wherein the frequency hopping information of the positioning signal comprises at least one of:
second indication information, used to indicate whether transmission of the positioning signal is performed in a frequency hopping manner; or
third indication information, used to indicate a frequency interval for frequency hopping between two adjacent frequency points of the positioning signal when transmission of the positioning signal is performed in a frequency hopping manner.

41. The method of any one of claims 38 to 40, wherein the ID information of the transmitting-end device of the positioning signal is a partial association ID (AID) of the transmitting-end device.

42. The method of any one of claims 35 to 41, wherein the first positioning frame comprises fourth indication information, and the fourth indication information is used to indicate whether feedback is required for the positioning signal.

43. The method of any one of claims 35 to 42, wherein the first positioning frame is a physical layer protocol data unit (PPDU) frame, the PPDU frame comprises a preamble portion and a data portion, the preamble portion is located before the data portion, and the data portion is used to carry the positioning signal.

44. The method of claim 43, wherein the preamble portion comprises a synchronization sequence, and the synchronization sequence is used to indicate whether the data portion carries the positioning signal; and/or
the preamble portion comprises a signal (SIG) field, and the SIG field is used to indicate whether the data portion carries the positioning signal.

45. The method of claim 44, wherein a format of the synchronization sequence is used to indicate whether the data portion carries the positioning signal.

46. The method of claim 45, wherein the synchronization sequence being a first format is used to indicate that the data portion does not carry the positioning signal; the synchronization sequence being a second format is used to indicate that the data portion carries the positioning signal.

47. The method of claim 46, wherein a length of the synchronization sequence of the first format is identical to or different from a length of the synchronization sequence of the second format.

48. The method of claim 46 or 47, wherein the synchronization sequence of the first format and the synchronization sequence of the second format are generated based on a same sequence, or the synchronization sequence of the first format and the synchronization sequence of the second format are generated based on different sequences.

49. The method of any one of claims 44 to 48, wherein the SIG field is located between the synchronization sequence and the data portion.

50. The method of any one of claims 44 to 49, wherein the SIG field is further used to carry configuration information of the positioning signal.

51. The method of any one of claims 44 to 50, wherein the SIG field is further used to carry fourth indication information, and the fourth indication information is used to indicate whether feedback is required for the positioning signal.

52. The method of any one of claims 43 to 51, wherein the PPDU frame is a wake up radio (WUR) PPDU frame.

53. The method of any one of claims 35 to 52, wherein the first positioning frame is a media access control (MAC) frame, the MAC frame comprises a MAC header and a frame body, the MAC header is located before the frame body, and the frame body is used to carry the positioning signal.

54. The method of claim 53, wherein the MAC header is used to carry first indication information, and the first indication information is used to indicate whether the frame body carries the positioning signal.

55. The method of claim 54, wherein the MAC header comprises a frame control (FC) field, and the FC field is used to carry the first indication information.

56. The method of claim 55, wherein the FC field is set to a reserved value for indicating that the frame body carries the positioning signal.

57. The method of any one of claims 53 to 56, wherein the MAC header comprises a first address field, and the first address field is used to carry an address of a transmitting-end device of the MAC frame.

58. The method of claim 57, wherein the first address field is further used to carry configuration information of the positioning signal.

59. The method of claim 57 or 58, wherein the first address field comprises an ID field, the ID field is used to indicate whether the MAC header comprises a second address field, and the second address field is used to carry an address of a receiving-end device of the MAC frame.

60. The method of any one of claims 57 to 59, wherein the first address field comprises a feedback indication field, and the feedback indication field is used to indicate whether feedback is required for the positioning signal.

61. The method of any one of claims 53 to 60, wherein the MAC header does not comprise a sequence control (SC) field.

62. The method of any one of claims 53 to 61, wherein the MAC frame does not comprise a frame check sequence (FCS) field.

63. The method of any one of claims 53 to 62, wherein a length of the frame body of the MAC frame is a fixed length.

64. The method of claim 63, wherein the fixed length is one of a plurality of preset fixed lengths.

65. The method of any one of claims 35 to 64, further comprising:
receiving, by the AMP device, a second positioning frame, wherein the first positioning frame and the second positioning frame are transmitted on different frequency domain resources.

66. The method of claim 65, wherein the positioning signal in the first positioning frame and a positioning signal in the second positioning frame are transmitted simultaneously; or, the positioning signal in the first positioning frame and the positioning signal in the second positioning frame are transmitted in time division.

67. The method of any one of claims 35 to 66, further comprising:
in a case that a transmitting-end device of the positioning signal indicates that the AMP device is not required to feed back for the positioning signal, or the transmitting-end device does not indicate whether the AMP device is required to feed back for the positioning signal, not feeding back, by the AMP device, for the positioning signal.

68. A transmitting-end device, comprising:
a communication unit, configured to transmit a first positioning frame, wherein the first positioning frame carries a positioning signal, and the positioning signal is used for positioning of an ambient power (AMP) device.

69. The transmitting-end device of claim 68, wherein the first positioning frame comprises first indication information, and the first indication information is used to indicate whether the first positioning frame carries the positioning signal.

70. The transmitting-end device of claim 68 or 69, wherein the first positioning frame comprises configuration information of the positioning signal.

71. The transmitting-end device of claim 70, wherein the configuration information of the positioning signal comprises at least one of:
bandwidth information of the positioning signal;
frequency hopping information of the positioning signal;
channel information used to transmit the positioning signal; or
identifier (ID) information of the transmitting-end device of the positioning signal.

72. The transmitting-end device of claim 71, wherein the bandwidth information of the positioning signal is used to indicate that the bandwidth of the positioning signal is 200 kHz, 250 kHz, or 1 MHz.

73. The transmitting-end device of claim 71 or 72, wherein the frequency hopping information of the positioning signal comprises at least one of:
second indication information, used to indicate whether transmission of the positioning signal is performed in a frequency hopping manner; or
third indication information, used to indicate a frequency interval for frequency hopping between two adjacent frequency points of the positioning signal when transmission of the positioning signal is performed in a frequency hopping manner.

74. The transmitting-end device of any one of claims 71 to 73, wherein the ID information of the transmitting-end device of the positioning signal is a partial association ID (AID) of the transmitting-end device.

75. The transmitting-end device of any one of claims 68 to 74, wherein the first positioning frame comprises fourth indication information, and the fourth indication information is used to indicate whether feedback is required for the positioning signal.

76. The transmitting-end device of any one of claims 68 to 75, wherein the first positioning frame is a physical layer protocol data unit (PPDU) frame, and the PPDU frame comprises a preamble portion and a data portion, the preamble portion is located before the data portion, and the data portion is used to carry the positioning signal.

77. The transmitting-end device of claim 76, wherein the preamble portion comprises a synchronization sequence, and the synchronization sequence is used to indicate whether the data portion carries the positioning signal; and/or
the preamble portion comprises a signal (SIG) field, and the SIG field is used to indicate whether the data portion carries the positioning signal.

78. The transmitting-end device of claim 77, wherein a format of the synchronization sequence is used to indicate whether the data portion carries the positioning signal.

79. The transmitting-end device of claim 78, wherein the synchronization sequence being a first format is used to indicate that the data portion does not carry the positioning signal; the synchronization sequence being a second format is used to indicate that the data portion carries the positioning signal.

80. The transmitting-end device of claim 79, wherein a length of the synchronization sequence of the first format is identical to or different from a length of the synchronization sequence of the second format.

81. The transmitting-end device of claim 79 or 80, wherein the synchronization sequence of the first format and the synchronization sequence of the second format are generated based on a same sequence, or the synchronization sequence of the first format and the synchronization sequence of the second format are generated based on different sequences.

82. The transmitting-end device of any one of claims 77 to 81, wherein the SIG field is located between the synchronization sequence and the data portion.

83. The transmitting-end device of any one of claims 77 to 82, wherein the SIG field is further used to carry configuration information of the positioning signal.

84. The transmitting-end device of any one of claims 77 to 83, wherein the SIG field is further used to carry fourth indication information, and the fourth indication information is used to indicate whether feedback is required for the positioning signal.

85. The transmitting-end device of any one of claims 76 to 84, wherein the PPDU frame is a wake up radio (WUR) PPDU frame.

86. The transmitting-end device of any one of claims 68 to 85, wherein the first positioning frame is a media access control (MAC) frame, the MAC frame comprises a MAC header and a frame body, the MAC header is located before the frame body, and the frame body is used to carry the positioning signal.

87. The transmitting-end device of claim 86, wherein the MAC header is used to carry first indication information, and the first indication information is used to indicate whether the frame body carries the positioning signal.

88. The transmitting-end device of claim 87, wherein the MAC header comprises a frame control (FC) field, and the FC field is used to carry the first indication information.

89. The transmitting-end device of claim 88, wherein the FC field is set to a reserved value for indicating that the frame body carries the positioning signal.

90. The transmitting-end device of any one of claims 86 to 89, wherein the MAC header comprises a first address field, and the first address field is used to carry an address of the transmitting-end device of the MAC frame.

91. The transmitting-end device of claim 90, wherein the first address field is further used to carry configuration information of the positioning signal.

92. The transmitting-end device of claim 90 or 91, wherein the first address field comprises an ID field, the ID field is used to indicate whether the MAC header comprises a second address field, and the second address field is used to carry an address of a receiving-end device of the MAC frame.

93. The transmitting-end device of any one of claims 90 to 92, wherein the first address field comprises a feedback indication field, and the feedback indication field is used to indicate whether feedback is required for the positioning signal.

94. The transmitting-end device of any one of claims 86 to 93, wherein the MAC header does not comprises a sequence control (SC) field.

95. The transmitting-end device of any one of claims 86 to 94, wherein the MAC frame does not comprise a frame check sequence (FCS) field.

96. The transmitting-end device of any one of claims 86 to 95, wherein a length of the frame body of the MAC frame is a fixed length.

97. The transmitting-end device of claim 96, wherein the fixed length is one of a plurality of preset fixed lengths.

98. The transmitting-end device of any one of claims 68 to 97, wherein the communication unit is further configured to:
transmit a second positioning frame, wherein the first positioning frame and the second positioning frame are transmitted on different frequency domain resources, and a phase feature of the positioning signal carried in the first positioning frame and a phase feature of a positioning signal carried in the second positioning frame are used for the positioning of the AMP device.

99. The transmitting-end device of claim 98, wherein the positioning signal in the first positioning frame and the positioning signal in the second positioning frame are transmitted simultaneously; or, the positioning signal in the first positioning frame and the positioning signal in the second positioning frame are transmitted in time division.

100. The transmitting-end device of any one of claims 68 to 99, wherein the communication unit is further configured to:
in a case that the transmitting-end device indicates that the AMP device is not required to feed back for the positioning signal, or the transmitting-end device does not indicate whether the AMP device is required to feed back for the positioning signal, not receive feedback information of the positioning signal.

101. The transmitting-end device of any one of claims 68 to 100, wherein the transmitting-end device is an access point device or a station device.

102. An ambient power (AMP) device, comprising:
a communication unit, configured to receive a first positioning frame, wherein the first positioning frame carries a positioning signal, and the positioning signal is used for positioning of the AMP device.

103. A transmitting-end device, comprising: a processor and a memory, wherein the memory is configured to store a computer program, and the processor is configured to call and run the computer program stored in the memory to perform the method of any one of claims 1 to 34.

104. An ambient power (AMP) device, comprising: a processor and a memory, wherein the memory is configured to store a computer program, and the processor is configured to call and run the computer program stored in the memory to perform the method of any one of claims 35 to 67.

105. A chip comprising: a processor, wherein the processor is configured to call and run a computer program from a memory, to enable a device installed with the chip to perform the method of any one of claims 1 to 34, or the method of any one of claims 35 to 67.

106. A computer-readable storage medium, wherein the computer-readable storage medium is configured for storing a computer program, and the computer program enables a computer to perform the method of any one of claims 1 to 34 or the method of any one of claims 35 to 67.

107. A computer program product: comprising computer program instructions, wherein the computer program instructions enable a computer to perform the method of any one of claims 1 to 34, or the method of any one of claims 35 to 67.

108. A computer program, wherein the computer program enables a computer to perform the method of any one of claims 1 to 34 or the method of any one of claims 35 to 67.
